# DEMANDE DE BREVET EUROPEEN

(11) **EP 2 196 867 A1**
(43) Date de publication de la demande: **16.06.2010**
(21) Numéro de dépôt: 08171694.6
(22) Date de dépôt: 15.12.2008
(51) Int. Cl.: G04B 17/06, G04D 3/00

(54) **Spiral à élévation de courbe en matériau à base de silicium**

(71) Demandeur: MONTRES BREGUET S.A., 1344 L'Abbaye (CH)
(72) Inventeur: Zaugg, Alain, 1348, Le Brassus (CH); Bifrare, Christophe, 1342, Le Pont (CH); Vorpe, Sacha, 2615, Sonvilier (CH); Thiébaud, Jean-Philippe, 1588, Cudrefin (CH); Lippuner, Marc, 2540, Grenchen (CH)
(74) Mandataire: Couillard, Yann Luc Raymond

(57) **Abrégé**

L'invention se rapporte à un spiral (1,31) à élévation de courbe en matériau à base de silicium comportant un ressort-spiral (3,33) réalisé en une seule pièce et coaxialement avec une virole (5,35), une courbe terminale (7,37) et un dispositif d'élévation (9,39) entre la spire externe (15,45) dudit ressort-spiral et ladite courbe terminale. Selon l'invention, le spiral comporte deux parties uniques solidarisées afin d'augmenter la précision de développement dudit spiral.
L'invention se rapporte également au procédé de fabrication dudit spiral.
L'invention concerne le domaine des mouvements horlogers.

## Description

### Domaine de l'invention

L'invention se rapporte à un spiral à élévation de courbe et son procédé de fabrication et, plus particulièrement, à un tel spiral réalisé à base d'un matériau à base de silicium.

### Arrière plan de l'invention

L'organe régulateur d'une pièce d'horlogerie comporte généralement un volant d'inertie appelé balancier et un résonateur appelé spiral. Ces pièces sont déterminantes pour la qualité de marche de la pièce d'horlogerie. En effet, ils régulent la marche du mouvement, c'est-à-dire qu'ils contrôlent sa fréquence.

II est connu de fabriquer une partie d'une pièce d'horlogerie en matériau à base de silicium. En effet, l'utilisation d'un matériau micro-usinable comme le silicium présente des avantages en terme de précision de fabrication grâce aux avancées des procédés actuels notamment dans le domaine de l'électronique. II permet en outre de bénéficier de sa très faible sensibilité au magnétisme et au changement de température. Cependant, les parties à réaliser doivent être planes, il n'est actuellement pas possible de réaliser des pièces en silicium à plusieurs niveaux.

### Résumé de l'invention

Le but de la présente invention est de pallier tout ou partie les inconvénients cités précédemment en proposant un spiral à élévation de courbe en matériau à base de silicium de fabrication simple et qui autorise un écart de marche réduit.

A cet effet, l'invention se rapporte à un spiral à élévation de courbe en matériau à base de silicium comportant un ressort-spiral réalisé en une seule pièce et coaxialement avec une virole, une courbe terminale et un dispositif d'élévation de la spire externe dudit ressort-spiral et ladite courbe terminale **caractérisé en ce qu**'il comporte deux parties uniques solidarisées afin d'augmenter la précision de développement dudit spiral.

Avantageusement, à partir de deux uniques parties réalisées dans des couches de matériaux à base de silicium, on réalise un assemblage simple très peu sensible au magnétisme et au changement de température qui ne nécessite pas d'étapes complexes de mises comme actuellement effectuées pour la fabrication d'un tel spiral à partir d'une lame métallique.

Conformément à d'autres caractéristiques avantageuses de l'invention :
- le dispositif d'élévation comporte au moins un montant reliant une extrémité de ladite spire externe à une extrémité de ladite courbe terminale et réalisé en une seule pièce avec l'ensemble ressort-spiral - virole;
- chaque au moins un montant est solidarisé dans un évidement réalisé dans ladite extrémité de la courbe terminale ;
- le dispositif d'élévation comporte au moins un écarteur monté en renfort dudit au moins un montant et réalisé en une seule pièce avec la courbe terminale afin de maintenir un espacement prédéterminé entre l'extrémité de ladite spire externe et l'extrémité de ladite courbe terminale ;
- le montage dudit dispositif d'élévation est inversé entre l'ensemble ressort-spiral- virole et la courbe terminale ;
- le dispositif d'élévation comporte en outre des moyens de solidarisation afin d'améliorer la force de fixation dudit au moins un montant ;
- les moyens de solidarisation comportent un matériau adhésif, une couche d'oxyde dudit matériau ou une couche métallique ;
- le spiral comporte au moins une partie en oxyde de silicium afin de le rendre plus résistant mécaniquement et d'ajuster son coefficient thermo-élastique ;
- la courbe terminale est du type Phillips afin d'améliorer la concentricité de développement dudit spiral
- au moins une spire interne du ressort-spiral comporte une courbe du type Grossmann afin d'améliorer la concentricité de développement dudit spiral

De plus, l'invention se rapporte à une pièce d'horlogerie **caractérisée en ce qu**'elle comporte un spiral à élévation de courbe conforme à l'une des variantes précédentes.

Enfin, l'invention se rapporte à un procédé de fabrication d'un spiral à élévation de courbe comportant l'étape suivante :
a) se munir d'un premier substrat comportant une couche supérieure et une couche inférieure à base de silicium reliées entre elle par une couche intermédiaire ;
b) graver sélectivement au moins une cavité dans la couche supérieure afin de définir une courbe terminale ou une virole réalisée en une seule pièce et coaxialement avec un ressort-spiral;
   **caractérisé en ce qu**'il comporte en outre les étapes suivantes :
c) graver sélectivement au moins une cavité dans la couche inférieure afin de définir au moins un montant reliant une extrémité de la courbe terminale ou reliant la spire externe dudit ressort spiral ;
d) se munir d'un deuxième substrat comportant une couche à base de silicium ;
e) graver sélectivement au moins une cavité dans la couche dudit deuxième substrat afin de définir une virole réalisée en une seule pièce et coaxialement avec un ressort-spiral dont la spire externe comporte au moins un évidement ou une courbe terminale dont une extrémité comporte au moins un évidement ;
f) assembler ledit au moins un montant dans ledit au moins un évidement afin de former le spiral à élévation de courbe.
   Avantageusement, à partir de peu d'étapes, il est réalisé un spiral en matériau à base de silicium avec une meilleure précision par rapport aux étapes complexes de mises au point actuellement effectuées pour la fabrication d'un tel spiral à partir d'une lame métallique.
   Conformément à d'autres caractéristiques avantageuses de l'invention :
   - le deuxième substrat comporte une deuxième couche à base de silicium reliée avec la première par une couche intermédiaire, le procédé comportant, en outre, entre l'étapes e) et f), l'étape g) : graver sélectivement au moins une cavité dans la deuxième couche dudit deuxième substrat afin de définir au moins un écarteur apte à maintenir un espacement prédéterminé entre l'ensemble ressort-spiral - virole et la courbe terminale ;
   - le procédé comporte, en outre, après les étapes b), c) et e), l'étape h) : oxyder ledit matériau afin de rendre plus résistant mécaniquement et d'ajuster le coefficient thermo-élastique dudit spiral à élévation de courbe ;
   - le procédé comporte, en outre, après l'étape f), l'étape i) : oxyder ledit spiral à élévation afin d'améliorer la force de fixation dudit au moins un montant ;
   - le procédé comporte, en outre, avant ou après l'étape f), l'étape j) : déposer un matériau adhésif entre ledit au moins un montant et ledit au moins un évidement et, en outre, l'étape finale k) : chauffer ledit spiral dans le but d'activer ledit matériau adhésif afin d'améliorer la force de fixation dudit au moins un montant ;
   - le procédé comporte, en outre, avant l'étape f), l'étape I): déposer un matériau métallique entre ledit au moins un montant et ledit au moins un évidement permettant de chasser ce premier contre le dernier lors de l'étape f) afin d'améliorer la force de fixation dudit au moins un montant ;
   - le procédé comporte, en outre, pendant ou après l'étape f), l'étape m) : déposer un matériau de brasage entre ledit au moins un montant et ledit au moins un trou permettant de chasser ce premier contre le dernier afin d'améliorer la force de fixation dudit au moins un montant ;
   - le procédé comporte, en outre, l'étape finale n) : chauffer ledit spiral à élévation afin d'améliorer la force de fixation dudit au moins un montant.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une représentation en perspective d'un spiral à élévation de courbe selon l'invention ;
- la figure 2 est une représentation agrandie d'une partie de la figure 1 ;
- la figure 3 est une représentation partielle de la figure 1 ;
- la figure 4 est une représentation vue de dessus de la figure 1 ;
- la figure 5 est une représentation en perspective d'un spiral à élévation de courbe selon un deuxième mode de réalisation de l'invention ;
- la figure 6 est une représentation agrandie d'une partie de la figure 5;
- la figure 7 est une représentation partielle de la figure 5 ;
- la figure 8 est une représentation partielle de la figure 5 ;
- la figure 9 est une représentation de la coupe A-A de la figure 6 ;
- la figure 10 est un schéma fonctionnel des étapes du procédé de fabrication.

### Description détaillée des modes de réalisation préférés

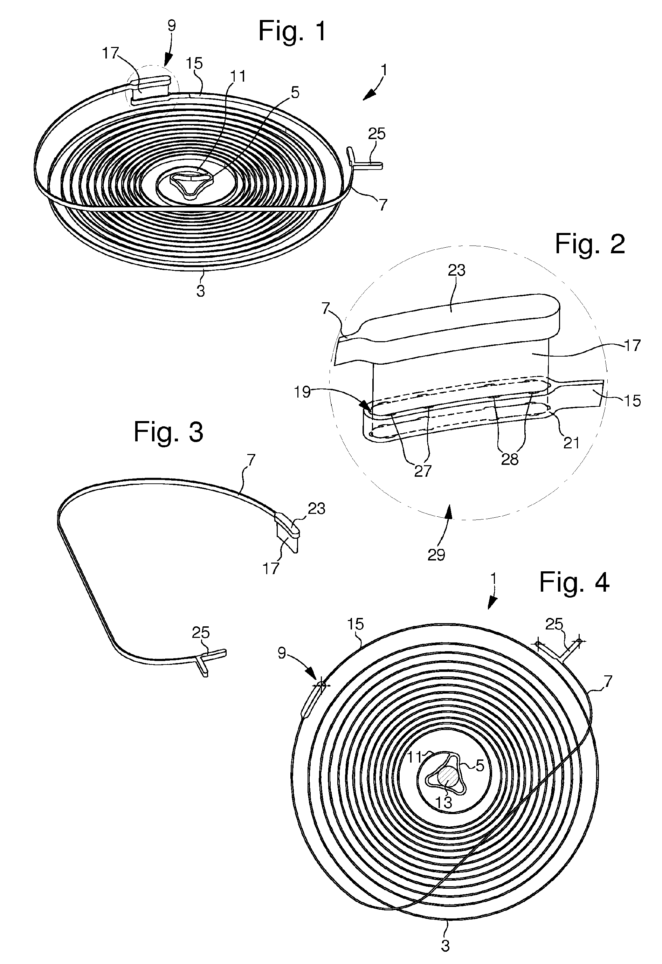

Dans les exemples illustrés aux figures 1 à 9, on peut voir deux modes de réalisation de spiral à élévation de courbe destiné à être monté dans une pièce d'horlogerie en coopération avec un balancier. Les figures permettent de montrer, à partir de deux modes de réalisation, les variantes et/ou alternatives possibles d'un dispositif à élévation de courbe selon l'invention.

Dans l'exemple illustré aux figures 1 à 4, selon un premier mode de réalisation, le spiral 1 comporte un ressort-spiral 3, une virole 5, une courbe terminale 7 et un dispositif d'élévation 9. Préférentiellement, le ressort-spiral 3 et la virole 5 forment une pièce unique afin d'éviter les imprécisions au niveau de leur interface qui nuiraient à la symétrie de développement du spiral 1.

Comme illustré aux figures 1 et 4, on peut voir que le ressort-spiral 3 comporte préférentiellement une spire interne 11 comprenant une courbe du type Grossmann. Une courbe du type Grossmann permet de compenser l'utilisation d'une virole 5 en rectifiant la spire interne 11 par rapport à la courbe idéale d'un spiral parfait du type Archimède. A ces mêmes figures 1 et 4, on peut voir que la virole 5 est de forme générale triangulaire et est apte à recevoir un axe 13 de balancier. Bien entendu, les formes générales de l'axe 13 de balancier et/ou de la virole 35 peuvent différer sans sortir du cadre de l'invention.

Préférentiellement, dans l'exemple illustré aux figures 1, 3 et 4, la courbe terminale 7 est du type Phillips, c'est-à-dire une courbe qui, pendant le développement du spiral 1, permet de garder un centre de gravité situé sur l'axe 13. De manière préférée, comme illustré à la figure 4, les hauteurs de la courbe terminale 7 et du ressort-spiral 3 sont identiques.

Grâce au respect de la géométrie de la courbe terminale 7 et de l'ensemble ressort-spiral 3 - virole 5 exposée ci-dessus, le développement symétrique du spiral 1 est structurellement garanti, cependant, le type de fabrication et le matériau utilisé ne doivent pas fausser le développement.

Afin de garantir la précision de fabrication de ces courbes mais également pour rendre quasiment insensible le spiral 1 au magnétisme et au changement de température, on utilise un matériau à base de silicium. Avantageusement, c'est également un matériau micro-usinable, c'est-à-dire un matériau qui peut être fabriqué avec une précision inférieure au micromètre, par exemple, par gravure ionique réactive profonde d'une plaque à base de silicium cristallin (également connu sous l'abréviation « DRIE » venant des termes anglais « Deep Reactive Ion Etching »).

Préférentiellement, le matériau à base de silicium peut également être recouvert de son oxyde afin d'adapter sa dilatation mais également son coefficient thermoélastique par rapport à celui du balancier afin de régler finement l'isochronisme du mouvement de la pièce d'horlogerie, c'est-à-dire rendre minimal son écart de marche.

Afin de réaliser le spiral à élévation de courbe 1, également appelé spiral Breguet, il est utilisé un dispositif d'élévation 9 destiné à rendre solidaire la spire externe 15 du ressort-spiral 3 avec la courbe terminale 7 située au-dessus dudit ressort-spiral. Comme illustré aux figures 1 à 3, le dispositif d'élévation 9 comporte un montant 17 réalisé en une seule pièce avec la courbe terminale 7 et un évidement 19 réalisé dans l'extrémité épaissie 21 de la spire externe 15 du ressort-spiral 3. Comme expliqué ci-dessous, le montant 17 est préférentiellement réalisé à partir d'une deuxième couche d'un matériau à base de silicium attachée à celle utilisée pour réaliser la courbe terminale 7 comme, par exemple, à l'aide d'un S.O.I. (abréviation venant des termes « Silicon On Isulator »).

Comme illustré aux figures 2 et 3, le montant 17 est situé à l'aplomb de l'extrémité épaissie 23 de la courbe terminale 7. Le montant 17 comporte une section elliptique sensiblement courbée en forme d'arc de cercle qui est plus petite que celles de l'extrémité épaissie 23 de la courbe 7 et de l'extrémité épaissie 21 de la spire externe 15 du ressort-spiral 3. Comme visible aux figures 3 et 4, la courbe terminale 7 comporte à son autre extrémité des moyens d'attache 25 destinés à coopérer avec un point fixe du mouvement horloger comme, par exemple, un pont.

Comme illustré à la figure 2, on peut voir plus précisément l'évidement 19 au niveau de l'extrémité épaissie 21 de la spire externe 15 du ressort-spiral 3. L'évidement 19 est de forme sensiblement complémentaire avec le montant 17 afin que ce dernier puisse être glisser contre ce premier. L'évidement 19 comporte ainsi une section sensiblement elliptique dont les flancs comporte des rainures 27 sensiblement verticales à la figure 2 destinées à réduire la surface de contact entre le montant 17 et l'évidement 19 lors du montage mais également servir d'espace pour éventuellement insérer des moyens de solidarisation 29 comme expliqué ci-dessous. On comprend donc que si les sections du montant 17 et de l'évidement 19 ont un intérêt à être complémentaires, elles peuvent être de forme différente à une ellipse sensiblement courbée en arc de cercle.

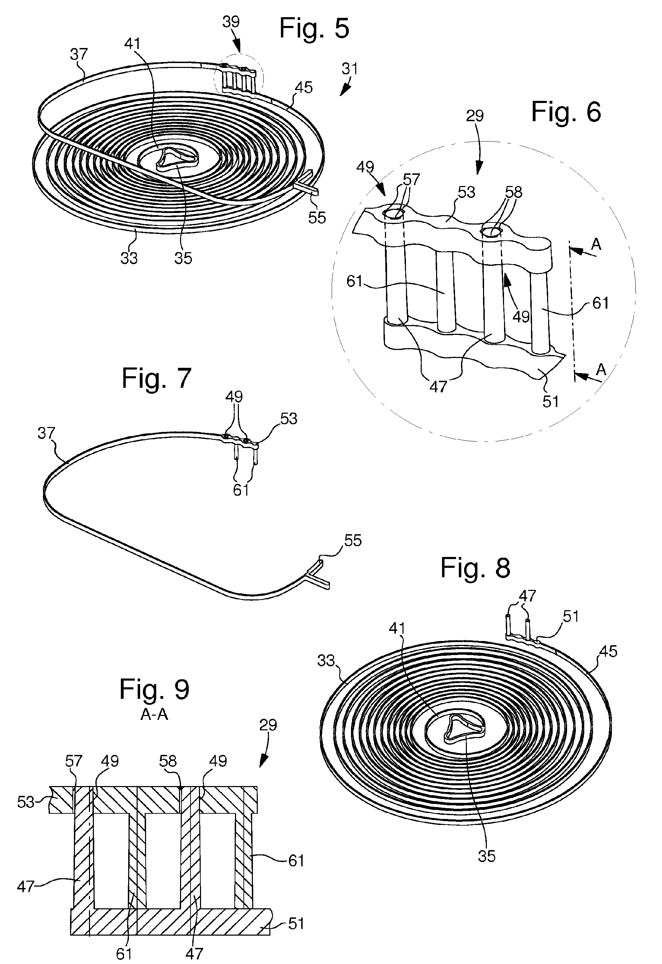

Dans l'exemple illustré aux figures 5 à 9, selon un deuxième mode de réalisation, le spiral 31 comporte un ressort-spiral 33, une virole 35, une courbe terminale 37 et un dispositif d'élévation 39. Préférentiellement, le ressort-spiral 33 et la virole 35 forment une pièce unique comme pour le premier mode de réalisation afin d'éviter les imprécisions au niveau de leur interface qui nuiraient à la symétrie de développement du spiral 31.

Comme illustré aux figures 5 et 8, on peut voir que le ressort-spiral 33 comporte préférentiellement une spire interne 41 comprenant une courbe du type Grossmann comme pour le premier mode de réalisation. A ces mêmes figures 5 et 8, on peut voir que la virole 35 est de forme générale triangulaire et que, comme pour la virole 5 du premier mode de réalisation, elle est apte à recevoir un axe de balancier. Bien entendu, les formes générales de l'axe de balancier et/ou de la virole 35 peuvent différer sans sortir du cadre de l'invention.

Préférentiellement, dans l'exemple illustré aux figures 5 et 7, la courbe terminale 37 est du type Phillips comme pour le premier mode de réalisation. De même, de manière préférée, les hauteurs de la courbe terminale 37 et du ressort-spiral 33 sont identiques.

Comme expliqué ci-dessus, le spiral 31 est préférentiellement en un matériau à base de silicium comme pour le premier mode de réalisation. Préférentiellement, le matériau à base de silicium peut également être recouvert de son oxyde afin d'adapter sa dilatation mais également son coefficient thermoélastique par rapport à celui du balancier afin de régler finement l'isochronisme du mouvement de la pièce d'horlogerie, c'est-à-dire rendre minimal son écart de marche.

Afin de réaliser le spiral à élévation de courbe 31, il est utilisé un dispositif d'élévation 39 destiné à rendre solidaires la spire externe 45 du ressort-spiral 33 avec la courbe terminale 37 située au-dessus dudit ressort-spiral. Comme illustré aux figures 5 à 9, le dispositif d'élévation 39 comporte deux montants 47 réalisés en une seule pièce au niveau de l'extrémité épaissie 51 du ressort-spiral 33, deux écarteurs 61 réalisés en une seule pièce au niveau de l'extrémité épaissie 53 de la courbe terminale 37 et deux évidements 49 réalisés dans l'extrémité épaissie 53 de la courbe terminale 37.

Comme expliqué ci-dessous, les montants 47 et les écarteurs 61 sont préférentiellement réalisés à partir d'une deuxième couche d'un matériau à base de silicium attachée à celle utilisée pour réaliser respectivement le ressort-spiral 33 et la courbe terminale 7 comme, par exemple, à l'aide de S.O.I..

Comme illustré aux figures 5, 6 et 9, chaque montant 47 est situé à la verticale de l'extrémité épaissie 51 du ressort-spiral 33 et comporte une section sensiblement circulaire. Comme visible aux figures 5 et 7, la courbe terminale 37 comporte à l'extrémité opposée des moyens d'attache 55 destinés à coopérer avec un point fixe du mouvement horloger comme, par exemple, un pont.

Comme illustré aux figures 6, 7 et 9, on peut voir plus précisément les évidements 49 au niveau de l'extrémité épaissie 53 de la courbe terminale 37. Chaque évidement 49 est de forme sensiblement complémentaire avec un montant 47 afin que chacun des montants 47 puisse être glissé contre un des évidements 49. On comprend donc que si les sections d'un montant 47 et de son évidement 49 associé ont un intérêt à être complémentaires, elles peuvent être de forme différente à un cercle ou même différentes entre elles afin d'éviter le montage d'un montant 47 dans un autre évidement 49 que celui de forme complémentaire.

Dans l'exemple illustré aux figures 6 et 9, les évidements 49 comportent ainsi une section sensiblement circulaire dont les flancs comporte des rainures 57 sensiblement verticales destinées à réduire la surface de contact entre chaque montant 47 et son évidement 49 associé lors du montage mais également servir d'espace pour éventuellement insérer des moyens de solidarisation 29 comme expliqué ci-dessous.

Préférentiellement, selon une variante de l'invention illustré au deuxième mode de réalisation, des écarteurs 61 sont présents entre les extrémités épaissies 51 et 53 respectivement du ressort-spiral 33 et de la courbe terminale 37 afin de les maintenir à un espacement prédéterminé. Selon l'exemple illustré aux figures 6, 7 et 9, on voit que les écarteurs 61 sont réalisés en une seule pièce avec la courbe terminale 37 et reposent contre l'extrémité épaissie 51 du ressort-spiral 33. On comprend donc que les écarteurs 61 permettent de limiter l'enfoncement des montants 47 dans leur évidement 49 respectif et, ainsi, améliorent la qualité de fabrication du spiral 31.

A la lecture du deuxième mode de réalisation, on déduit que la variante incluant les écarteurs 61 est également applicable au premier mode de réalisation. On comprend également que le dispositif d'élévation 9 du premier mode de réalisation est monté inversé par rapport à celui 39 du deuxième mode de réalisation en ayant le même résultat avantageux. En effet, on peut remarquer que l'emplacement des évidements 19, 49 et des montants 17, 47 est inversé entre le ressort-spiral 3, 33 et la courbe terminale 7, 37.

Préférentiellement, à partir des deux modes de réalisation expliqués ci-dessus, le dispositif d'élévation 9, 39 peut comporter également des moyens de solidarisation 29 destinés à améliorer la force de fixation du montant 17, 47. Selon l'invention, plusieurs alternatives de moyens de solidarisation 29 sont possibles suivant le procédé utilisé comme expliqué ci-après. Ainsi, les moyens de solidarisation 29 comportent au moins une couche 28, 58 entre chaque montant 17, 47 et son évidement 19, 49. Comme expliqué ci-dessus, ladite au moins une couche 28, 58 peut siéger notamment dans les rainures 27, 57 et peut ainsi comporter un matériau adhésif, un matériau métallique, un oxyde ou un alliage de fusion des matériaux utilisés ou même une brasure.

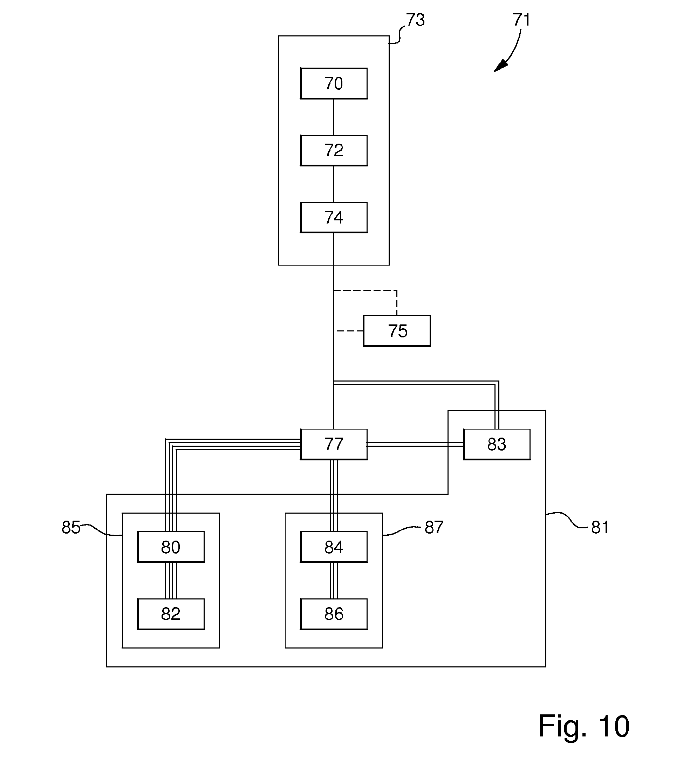

Le procédé 71 de fabrication d'un spiral à élévation de courbe 1, 31 selon les deux modes de réalisation de l'invention va maintenant être expliqué à l'aide de la figure 10. Le procédé 71 comporte principalement une étape 73 de fabrication des composants et une étape 77 d'assemblage des composants. Préférentiellement, le procédé comporte également une étape 75 de renforcement mécanique desdits composants et une étape 81 de renforcement de l'assemblage.

Comme illustré à la figure 10, la première étape 73 est destinée à fabriquer lors des phases respectives 70, 72 et 74 les composants du spiral à élévation de courbe 1, 31, c'est-à-dire l'ensemble ressort-spiral 3, 33 - virole 5, 35, la courbe terminale 7, 37 et le dispositif d'élévation 9, 39. Préférentiellement, afin de fabriquer lesdits composants de manière très précises, on utilise un procédé de micro-usinage par voie sèche ou humide. Dans l'exemple expliqué ci-dessus, le micro-usinage peut être une attaque sèche anisotropique du type gravure ionique réactive profonde de couches à base de silicium cristallin (également connu sous les termes anglais « Deep Reactive Ion Etching »).

Ainsi, la phase 70 consiste dans un premier temps à se munir d'un premier substrat du type S.O.I. et d'un deuxième substrat du type plaque en silicium. Bien entendu comme expliqué ci-dessus, dans le cas de la variante utilisant les écarteurs 61, le deuxième substrat sera également du type S.O.I..

Les phases 72 et 74 consistent ensuite à graver respectivement les couches du premier substrat et le ou les couches du deuxième substrat. Pour chaque couche, dans un premier temps, un masque de protection est revêtu sur ladite couche, par exemple, à l'aide d'un procédé de photolithographie d'une résine photosensible. Dans un deuxième temps, l'ensemble masque - couche est soumis à l'attaque anisotropique, seules les parties de la couche non protégées étant gravées. Finalement, dans un troisième temps, le masque de protection est retiré. On comprend donc que le masque de protection détermine directement la forme finale des composants gravés sur chaque couche.

Lors des phases 72 et/ou 74, suivant le mode de réalisation et/ou la variante citée ci-dessus, on peut, par exemple, obtenir la courbe terminale 7 avec le montant 17 et les moyens d'attache 25 de la figure 3 en une seule pièce à partir d'un substrat S.O.I., la courbe terminale 37 avec les écarteurs 61, les moyens d'attache 55 et les évidements 49 de la figure 7 en une seule pièce à partir d'un substrat S.O.I. mais également l'ensemble ressort-spiral 33 - virole 35 avec les montants 47 de la figure 8 en une seule pièce à partir d'un substrat S.O.I. et l'ensemble ressort-spiral 3 - virole 5 avec l'évidement 19 des figures 1 et 2 à partir d'une couche unique en silicium.

Avantageusement, il est ainsi aisé de fabriquer le spiral à élévation de courbe 1, 31 selon les cotes de mouvements ou calibres existants. Ainsi, de manière avantageuse, les mouvements ou calibres peuvent toujours être fabriqués en intervertissant uniquement le spiral à élévation de courbe métallique utilisé habituellement par le nouveau 1, 31 fabriqué en silicium avec une amélioration de leur écart de marche et de leur qualité. On peut également conclure qu'il est possible de graver chaque substrat de mêmes composants en plusieurs exemplaires.

La deuxième étape 77 est destinée à assembler les composants gravés lors de l'étape 73, c'est-à-dire l'ensemble ressort-spiral 3, 33 - virole 5, 35, la courbe terminale 7, 37 et le dispositif d'élévation 9, 39. A cet effet, dans un premier temps, chaque composant nécessaire est détaché du substrat gravé, par exemple par rupture de ponts de matière laissés entre chaque composant et son substrat. Dans un deuxième temps, à partir de deux uniques parties, les trois composants sont assemblés afin de réaliser le spiral 1, 31. Dans ce deuxième temps, l'extrémité 21, 51 de la spire externe 15, 45 est ainsi solidarisée à l'extrémité 23, 53 de la courbe terminale 7, 37 par emboîtement à l'aide du dispositif d'élévation 9, 39.

Préférentiellement, à la fin de l'étape 77, le spiral 1, selon le premier mode de réalisation de la figure 1, comporte une hauteur globale sensiblement égale à l'épaisseur du premier substrat utilisé pour réaliser la courbe terminale 7 et le montant 17.

Selon le deuxième mode de réalisation de la figure 5, à la fin de l'étape 77, le spiral 31 comporte une hauteur globale sensiblement égale à l'épaisseur du deuxième substrat utilisé pour réaliser l'ensemble ressort-spiral 33 - virole 35 et les montants 47. Avantageusement grâce aux écarteurs 61, lors de la phase 77, l'espacement est garanti entre l'extrémité épaissie 51 de la spire externe 45 du ressort-spiral 33 et l'extrémité épaissie 53 de la courbe terminale 37.

Comme expliqué ci-dessus, le procédé 71 peut également comporter une étape 75 destinée à renforcer les composants gravés consistant à réaliser une oxydation par plasma apte à former en surface une surépaisseur de dioxyde de silicium. Dans l'exemple illustré en traits discontinus à la figure 10, l'étape 75 de renforcement est réalisée entre l'étape 73 de gravage et l'étape 77 d'assemblage ce qui permet d'oxyder les couches gravées entières, c'est-à-dire tous les composants en même temps. Bien entendu, l'étape 75 peut également être réalisée après les phases 72 et/ou 74.

Comme expliqué ci-dessus, le procédé 71 peut également comporter une étape 81 destinée à renforcer l'assemblage des composants gravés à l'aide de moyens de solidarisation 29. Dans l'exemple illustré à la figure 10, on distingue trois alternatives distinctes dont les processus sont représentés à l'aide de traits double, triple ou quadruple.

Selon une première alternative des moyens de solidarisation 29 illustrée par un trait double à la figure 10, l'étape 81 de renforcement peut consister à déposer, lors d'une phase 83, une couche 28, 58 à l'intérieur des évidements 19, 49 et notamment des rainures 27, 57 afin d'autoriser le chassage des montants 17, 47 dans lesdits évidements. Ainsi, une telle couche 28, 58 pourrait consister en une couche métallique obtenue, par exemple, par dépôt physique en phase vapeur. En effet, l'absence de domaine plastique du silicium, peut nécessiter l'utilisation d'une couche 28, 58 apte à se déformer pour éviter la rupture des montants 17, 47 et/ou des évidements 19, 49 car la force de chassage nécessaire au bon fonctionnement du spiral 1, 31 peut générer une contrainte supérieure à la limite de la zone élastique dudit silicium.

Bien entendu, alternativement, les couches 28, 58 peuvent également être déposées non pas à l'intérieur des évidements 19, 49 mais sur les extrémités des montants 17, 47. On comprend donc, dans l'exemple illustré par un trait double à la figure 10, que les couches 28, 58 doivent être, dans la première alternative, déposées avant l'étape 77 d'assemblage. Cependant, le dépôt de la phase 83 peut également consister en une couche 28, 58 de brasure. Le brasage pourrait alors s'effectuer soit pendant l'étape 77 d'assemblage soit après.

Selon une deuxième alternative des moyens de solidarisation 29 illustrée par un trait quadruple à la figure 10, l'étape 81 de renforcement de l'assemblage peut consister à déposer, lors d'un processus 85, une couche adhésive 28, 58 entre les évidements 19, 49 et les montants 17, 47 afin d'améliorer la force de fixation desdits montants. Ainsi, une première phase 80 peut consister à déposer un matériau adhésif à l'interface des composants assemblés puis, préférentiellement, dans une deuxième phase 82 à chauffer l'ensemble afin d'activer ledit matériau adhésif. Une telle couche 28, 58 pourrait alors consister, par exemple, en une couche de colle polymère.

Bien entendu, alternativement, la phase de dépôt 80 peut également être réalisée avant l'étape 77 d'assemblage si le matériau adhésif à l'état non activé n'est pas assez ou trop visqueux. La phase 80 de dépôt pourrait alors être effectuée, à l'intérieur des évidements 19, 49 et/ou sur les extrémités des montants 17, 47, avant l'étape 77 d'assemblage et, préférentiellement, chauffés, après l'étape 77 d'assemblage, lors de la phase 82. On comprend donc, dans cet exemple de la deuxième alternative, que les couches 28, 58 permettent, grâce à leur pourvoir d'adhérence, de fermement maintenir l'assemblage en place.

Selon une troisième alternative des moyens de solidarisation 29 illustrée par un trait triple à la figure 10, l'étape 81 de renforcement de l'assemblage peut consister à former, lors d'un processus 87, une couche de solidarisation 28, 58 entre les évidements 19, 49 et les montants 17, 47 afin d'améliorer la force de fixation desdits montants. Ainsi, une première phase 84 peut consister à oxyder, par exemple par attaque plasma, la surface du spiral 1, 31 à base de silicium afin de former une gangue en dioxyde de silicium apte à améliorer la solidarisation ses composants assemblés puis, préférentiellement, dans une deuxième phase 86, à chauffer l'ensemble afin de parfaire ladite solidarisation.

Bien entendu, alternativement, la phase d'oxydation 84 peut également être réalisée avant l'étape 77 d'assemblage et remplacée par l'étape optionnelle d'oxydation 75. Ainsi, les composants déjà oxydés seraient assemblés lors de l'étape 77 et, préférentiellement, chauffés lors de la phase 86 afin de créer une couche 28, 58 unique en dioxyde de silicium à l'interface entre les évidements 19, 49 et les montants 17, 47 dans le but d'améliorer la force de fixation desdits montants. On notera qu'une phase d'hydrophilisation préalable à la phase 86 de chauffage permet d'améliorer l'étape d'unification des couches de dioxyde de silicium. On comprend donc, dans cet exemple de la troisième alternative, que les couches 28, 58, comme les deux autres alternatives, un renforcement de l'assemblage entre les évidements 19, 49 et les montants 17, 47.

Enfin, à titre de variante à la troisième alternative, il peut être envisagé un processus 87 comportant une unique étape 86 de chauffage des composants en silicium assemblés lors de l'étape 77 destinée à souder les interfaces sous contraintes desdits composants.

## Revendications

1. Spiral (1,31) à élévation de courbe en matériau à base de silicium comportant un ressort-spiral (3, 33) réalisé en une seule pièce et coaxialement avec une virole (5, 35), une courbe terminale (7, 37) et un dispositif d'élévation (9, 39) entre de la spire externe (15, 45) dudit ressort-spiral et ladite courbe terminale **caractérisé en ce qu'**il comporte deux parties uniques solidarisées afin d'augmenter la précision de développement dudit spiral.

2. Spiral selon la revendication 1, **caractérisé en ce que** le dispositif d'élévation (39) comporte au moins un montant (47) reliant une extrémité (51) de ladite spire externe à une extrémité (53) de ladite courbe terminale et réalisé en une seule pièce avec l'ensemble ressort-spiral (33) - virole (35).

3. Spiral selon la revendication 2, **caractérisé en ce que** chaque au moins un montant (47) est solidarisé dans un évidement (49) réalisé dans ladite extrémité de la courbe terminale (37).

4. Spiral selon la revendication 2 ou 3, **caractérisé en ce que** le dispositif d'élévation (39) comporte au moins un écarteur (61) monté en renfort dudit au moins un montant et réalisé en une seule pièce avec la courbe terminale (37) afin de maintenir un espacement prédéterminé entre l'extrémité (51) de ladite spire externe et l'extrémité (53) de ladite courbe terminale.

5. Spiral selon l'une des revendications 2 à 4, **caractérisé en ce que** le montage dudit dispositif d'élévation (9, 39) est inversé entre l'ensemble ressort-spiral (3, 33) - virole (5, 35) et la courbe terminale (7, 37).

6. Spiral selon l'une des revendications 2 à 5, **caractérisé en ce que** le dispositif d'élévation (9, 39) comporte en outre des moyens de solidarisation (29) afin d'améliorer la force de fixation dudit au moins un montant (17, 47).

7. Spiral selon la revendication 6, **caractérisé en ce que** les moyens de solidarisation (29) comportent un matériau adhésif.

8. Spiral selon la revendication 6, **caractérisé en ce que** les moyens de solidarisation (29) comportent une couche (28, 58) d'oxyde dudit matériau.

9. Spiral selon la revendication 6, **caractérisé en ce que** les moyens de solidarisation (29) comportent une couche (28, 58) métallique apte à permettre le chassage dudit au moins un montant (17, 47).

10. Spiral selon l'une des revendications précédentes, **caractérisé en ce qu'**il comporte au moins une partie en oxyde de silicium afin de le rendre plus résistant mécaniquement et d'ajuster son coefficient thermo-élastique.

11. Spiral selon l'une des revendications précédentes, **caractérisé en ce que** la courbe terminale (7, 37) est du type Phillips afin d'améliorer la concentricité de développement dudit spiral.

12. Spiral selon l'une des revendications précédentes, **caractérisé en ce qu'**au moins une spire interne (11, 41) du ressort-spiral (3, 33) comporte une courbe du type Grossmann afin d'améliorer la concentricité de développement dudit spiral.

13. Pièce d'horlogerie **caractérisée en ce qu'**elle comporte un spiral à élévation de courbe (1, 31) conforme à l'une des revendications précédentes.

14. Procédé de fabrication (71) d'un spiral à élévation de courbe (1) comportant l'étape suivante :
a) se munir (70) d'un premier substrat comportant une couche supérieure et une couche inférieure à base de silicium reliées entre elle par une couche intermédiaire ;
b) graver (72) sélectivement au moins une cavité dans la couche supérieure afin de définir une courbe terminale (7) ;
**caractérisé en ce qu'**il comporte en outre les étapes suivantes:
c) graver (72) sélectivement au moins une cavité dans la couche inférieure afin de définir au moins un montant (17) reliant une extrémité (23) de la courbe terminale (7) ;
d) se munir (70) d'un deuxième substrat comportant une couche à base de silicium ;
e) graver (74) sélectivement au moins une cavité dans la couche dudit deuxième substrat afin de définir une virole (5) réalisée en une seule pièce et coaxialement avec un ressort-spiral (3) dont la spire externe (15) comporte au moins un évidement (19) ;
f) assembler (77) ledit au moins un montant dans ledit au moins un évidement afin de former le spiral à élévation de courbe (1).

15. Procédé de fabrication (71) d'un spiral à élévation de courbe (31) comportant l'étape suivante :
a) se munir (70) d'un premier substrat comportant une couche supérieure () et une couche inférieure à base de silicium reliées entre elle par une couche intermédiaire ;
b) graver (72) sélectivement au moins une cavité dans la couche supérieure afin de définir une virole (35) réalisée en une seule pièce et coaxialement avec un ressort-spiral (33) ;
**caractérisé en ce qu'**il comporte en outre les étapes suivantes :
c) graver (72) sélectivement au moins une cavité dans la couche inférieure afin de définir au moins un montant (47) reliant la spire externe (45) dudit ressort spiral ;
d) se munir (70) d'un deuxième substrat comportant une couche à base de silicium ;
e) graver (74) sélectivement au moins une cavité dans la couche dudit deuxième substrat afin de définir une courbe terminale (37) dont une extrémité (53) comporte au moins un évidement (49) ;
f) assembler (77) ledit au moins un montant dans ledit au moins un évidement afin de former le spiral à élévation de courbe (31).

16. Procédé (71) selon la revendication 14 ou 15, **caractérisé en ce que** le deuxième substrat comporte une deuxième couche à base de silicium reliée avec la première par une couche intermédiaire, le procédé comportant, en outre, entre l'étapes e) et f), l'étape suivante :
g) graver (74) sélectivement au moins une cavité dans la deuxième couche dudit deuxième substrat afin de définir au moins un écarteur (61) apte à maintenir un espacement prédéterminé entre l'ensemble ressort-spiral (3, 33) - virole (5, 35) et la courbe terminale (7, 37).

17. Procédé (71) selon l'une des revendications 14 à 16, **caractérisé en ce que** le procédé comporte, en outre, après les étapes b), c) et e), l'étape suivante :
h) oxyder (75) ledit matériau afin de rendre plus résistant mécaniquement et d'ajuster le coefficient thermo-élastique dudit spiral à élévation de courbe.

18. Procédé (71) selon l'une des revendications 14 à 17, **caractérisé en ce que** le procédé comporte, en outre, après l'étape f), l'étape suivante :
i) oxyder (84) ledit spiral à élévation afin d'améliorer la force de fixation dudit au moins un montant.

19. Procédé (71) selon l'une des revendications 14 à 17,
**caractérisé en ce que** le procédé comporte, en outre, avant ou après l'étape f), l'étape suivante :
j) déposer (80) un matériau adhésif entre ledit au moins un montant et ledit au moins un évidement ;
et **en ce que** la procédé comporte en outre l'étape finale suivante :
k) chauffer (82) ledit spiral dans le but d'activer ledit matériau adhésif afin d'améliorer la force de fixation dudit au moins un montant.

20. Procédé (71) selon l'une des revendications 14 à 17, **caractérisé en ce que** le procédé comporte, en outre, avant l'étape f), l'étape suivante :
l) déposer (83) un matériau métallique entre ledit au moins un montant et ledit au moins un évidement permettant de chasser ce premier contre le dernier lors de l'étape f) afin d'améliorer la force de fixation dudit au moins un montant.

21. Procédé (71) selon l'une des revendications 14 à 17, **caractérisé en ce que** le procédé comporte, en outre, pendant ou après l'étape f), l'étape suivante :
m)déposer (83) un matériau de brasage entre ledit au moins un montant et ledit au moins un trou permettant de chasser ce premier contre le dernier afin d'améliorer la force de fixation dudit au moins un montant.

22. Procédé (71) selon l'une des revendications 14 à 18, **caractérisé en ce que** le procédé comporte, en outre, l'étape finale suivante :
n) chauffer (86) ledit spiral à élévation afin d'améliorer la force de fixation dudit au moins un montant.
